# EUROPÄISCHE PATENTANMELDUNG

(11) **EP 1 662 381 A1**
(43) Veröffentlichungstag der Anmeldung: **31.05.2006**
(21) Anmeldenummer: 05109429.0
(22) Anmeldetag: 11.10.2005
(51) Int. Cl.: G06F 9/44, G05B 19/05

(54) **Engineeringsystem mit automatischer Generierung von Instanzvorlagen**

(30) Priorität: 30.11.2004 DE 102004057727
(71) Anmelder: SIEMENS AKTIENGESELLSCHAFT, 80333 München (DE)
(72) Erfinder: Moritz, Soeren, 91353 Wimmelbach (DE); Dinges, Clemens, 90587 Obermichelbach (DE); Heller, Rainer, 90542 Eckental (DE); Lange, Ronald, 90766 Fürth (DE); Mossmeier, Peter, 90768 Fürth (DE); Sackerer, Maximilian, 91580 Petersaurach (DE)

(57) **Zusammenfassung**

Die Erfindung betrifft ein Verfahren und ein System zum Kopieren mindestens eines Softwareelementes. Um eine vereinfachte Bearbeitung softwarebasierter Projekte zu ermöglichen, werden folgende Verfahrenschritte vorgeschlagen:
- Prüfung, ob eine Verbindung zwischen dem Element und einer von einem Anwender modifizierbaren Instanzvorlage existiert,
und sofern keine Verbindung besteht:
- Erzeugen einer von dem Anwender modifizierbaren Instanzvorlage auf Basis des Elementes und
- Verbinden des Elementes mit der Instanzvorlage.

## Beschreibung

Die Erfindung betrifft ein Verfahren und ein System zum Kopieren mindestens eines Softwareelementes.

Ein derartiges System bzw. Verfahren kommt bei verschiedensten Applikationen zur computergestützten Erstellung von Grafiken und Texten sowie bei CAD-Applikationen zum Einsatz.

Ein derartiges System bzw. Verfahren kommt insbesondere in der Automatisierungstechnik beim Entwurf, der Implementierung oder der Inbetriebnahme von Anlagen und Maschinen zum Einsatz. Um den Aufwand für solche Engineeringaufgaben so gering wie möglich zu halten, ist man in der Regel bestrebt, hierbei auf bereits bestehende Komponenten und Module z. B. aus alten Projekten zuzugreifen, und diese an die Anforderungen aktueller Projekte anzupassen.

Werden zum Beispiel in einem Projekt mehrere Kettenförderer benötigt und existiert bereits in einem alten Projekt ein entsprechendes Element zur informationstechnischen Beschreibung eines Kettenförderers, bietet es sich an, dieses Element in das aktuelle Projekt zu übernehmen und an die projektspezifischen Belange anzupassen.

Zur softwaretechnischen Implementierung mehrerer Kettenförderer werden Kopien des Elementes erstellt. Bei der Erstellung der Kopien besteht oft der Wunsch, dass Änderungen am Element für alle im Projekt enthaltenen Kettenförderer wirksam sind. Für ein derartiges Nachführen von Änderungen für alle Kopien existieren heute folgende Mechanismen:

Beim Typkonzept erstellt ein Anwender bewusst eine wieder zu verwendende Informationseinheit - den Typ. Der Anwender kann Instanzen bilden, die auf den Typ verweisen. Für den Typ können Parameter definiert werden, anhand derer instanzspezifische Änderungen vorgenommen werden können. Die Instanz verweist auf den Typ und verwendet unmittelbar den Aufbau und das Verhalten des Typs. Somit kann das grundsätzliche Verhalten einer Instanz nur durch Änderung des zugehörigen Typs verändert werden. Die Bindung zwischen Instanz und Typ ist streng, d. h. die Instanz ist ohne den Typ nicht existenzfähig.

Beim Vorlagenkonzept erstellt der Anwender ebenfalls eine wieder zu verwendende Informationseinheit - die Vorlage. Im Unterschied zum Typkonzept nimmt der Anwender hierbei jedoch eine auf der Vorlage basierende Instanz als Kopie der Vorlage und zugleich als eigenständiges Informationselement wahr. Instanzspezifische Änderungen können vom Anwender durch Modifikation der Instanz durchgeführt werden. Das System erkennt, ob vorgenommene Änderungen als Parametrierung der Instanz zu interpretieren sind oder zu einem Lösen von der ursprünglichen Vorlage führen müssen.

Änderungen können beim Vorlagenkonzept im Unterschied zum Typkonzept sowohl an der Vorlage als auch an den Instanzen durchgeführt werden. Die Vorlage verhält sich für den Anwender wie eine Instanz. Wird die Vorlage geändert, kann die Änderung automatisch oder nach Aufforderung manuell durch den Anwender an alle mit der Vorlage verbundenen Instanzen übertragen werden, wobei die instanzspezifischen Änderungen nicht überschrieben werden.

Sowohl dem Typ- als auch dem Vorlagenkonzept ist gemein, dass der Anwender seine eigene wieder zu verwendende Informationseinheit bilden kann und somit die Möglichkeit hat, Instanzen und Kopien von Instanzen durch Änderungen des Typs oder der Vorlage gleichermaßen zu modifizieren. Die Änderungen wirken sich jedoch nur dann auf alle Kopien einer Instanz aus wenn alle Kopien wie auch die ursprüngliche Instanz mit der Vorlage bzw. dem Typ verbunden sind.

Beim Kopieren von Grundelementen - Elementen die im System inhärent sind - wird in heutigen Systemen keine Bindung zwischen dem ursprünglichen Grundelement und dessen Kopie erzeugt. Grundelement und Kopie verhalten sich wie zwei voneinander unabhängige Instanzen.

Der Erfindung liegt die Aufgabe zu Grunde, ein Verfahren und ein System zur vereinfachten Bearbeitung softwarebasierter Projekte anzugeben.

Diese Aufgabe wird durch ein Verfahren zum Kopieren mindestens eines Softwareelementes gelöst, bei dem vor dem Kopieren folgende Verfahrensschritte durchgeführt werden:
- Prüfung, ob eine Verbindung zwischen dem Softwareelement und einer von einem Anwender modifizierbaren Instanzvorlage existiert,
und sofern keine Verbindung besteht:
- Erzeugen einer von dem Anwender modifizierbaren Instanzvorlage auf Basis des Softwareelementes und
- Verbinden des Softwareelementes mit der Instanzvorlage.

Ferner wird diese Aufgabe durch ein Computerprogrammprodukt zur Durchführung eines derartigen Verfahrens gelöst.

Weiter wird diese Aufgabe durch ein System zur Projektierung von Daten gelöst mit einer Verarbeitungseinheit (402) zum Kopieren mindestens eines Softwareelementes, wobei die Verarbeitungseinheit (402) zur Durchführung folgender Verfahrensschritte vor dem Kopieren vorgesehen ist:
- Prüfung, ob eine Verbindung zwischen dem Softwareelement und einer von einem Anwender modifizierbaren Instanzvorlage existiert,
und sofern keine Verbindung besteht:
- Erzeugen einer von dem Anwender modifizierbaren Instanzvorlage auf Basis des Softwareelementes und
- Verbinden des Softwareelementes mit der Instanzvorlage.

Das erfindungsgemäße Verfahren gestaltet sich wie folgt:

Nachdem ein Anwender ein Kommando zur Kopie eines Softwareelementes gesetzt hat, wird von der Verarbeitungseinheit überprüft, ob das Softwareelementes mit einer Instanzvorlage - verbunden ist. Der Begriff Instanzvorlage umfasst hier wie im gesamten Dokument sowohl einen Typ gemäß dem eingangs erwähnten Typkonzept als auch eine Vorlage gemäß dem eingangs geschilderten Vorlagenkonzept. Besteht eine solche Verbindung, wird der Kopiervorgang direkt ausgelöst. In diesem Fall können Änderungen an dem ursprünglichen Element und dessen Kopie in gleicher Weise bewirkt werden, in dem die entsprechende Instanzvorlage modifiziert wird.

Besteht noch keine Verbindung zwischen dem ursprünglichen Softwareelement und einer Instanzvorlage, wird auf Basis des ursprünglichen Softwareelementes zunächst eine Instanzvorlage generiert und anschließend das ursprüngliche Element mit der Instanzvorlage verbunden. Nachfolgend wird der Kopiervorgang ausgelöst.

Auf diese Weise ist sichergestellt, dass eine Instanz und alle Kopien der Instanz mit der gleichen Instanzvorlage verbunden werden. Besteht ein Änderungswunsch an der Instanz, so werden Änderungen für alle Kopien nachgeführt. Hierzu muss lediglich die mit der Instanz und dessen Kopien verbundene Vorlage oder der mit der Instanz und dessen Kopien verbundene Typ geändert werden.

In einer vorteilhaften Ausführungsform der Erfindung ist die Verarbeitungseinheit zur automatischen Durchführung mindestens eines Verfahrensschrittes insbesondere ohne Anwendereingriff vorgesehen ist. Denkbar ist natürlich auch, dass sämtlich Verfahrensschritte automatisch ausgeführt werden, sobald der Anwender einen Kopierbefehl indiziert.

Eine automatische Durchführung der Verfahrensschritte ist unter Umständen nicht bei allen Anwendungen sinnvoll, da eventuell nicht für jedes zu kopierende Softwareelement die Verbindung mit einer Instanzvorlage gewünscht ist. In solchen Fällen ist es zweckmäßig, wenn die Verarbeitungseinheit zur anwendergesteuerten Durchführung mindestens eines Verfahrensschrittes vorgesehen ist. Hierbei kann z. B. durch den Anwender im Vorfeld definiert werden, zu welchen Typen von Softwareelementen eine von dem Anwender modifizierbare Instanzvorlage gewünscht wird. Denkbar ist beispielsweise, dass nur für Softwareelemente, die aus gruppierten Einzelelementen erzeugt wurden, eine Instanzvorlage erzeugt werden soll. Bei Softwareelementen, zu denen keine Instanzvorlage gewünscht wird, werden die genannten Verfahrensschritte vor dem Kopiervorgang nicht durchgeführt.

Alternativ wird zunächst der Verfahrenschritt "Prüfung, ob eine Verbindung zwischen dem Softwareelement und einer von einem Anwender modifizierbaren Instanzvorlage existiert" durchgeführt. Wird hierbei festgestellt, dass keine Verbindung existiert, wird der Anwender z. B. über ein Dialogfenster gefragt, ob er eine entsprechende Instanzvorlage zu dem gewählten Element erzeugen möchte.

Eine vorteilhafte Ausführungsform des erfindungsgemäßen Systems ist derart gestaltet, dass die Verarbeitungseinheit zum Kopieren gruppierter systeminhärenter Grundelemente vorgesehen ist. Systeminhärente Grundelemente sind nicht mit einer vom Anwender modifizierbaren Instanzvorlage verbunden. Gruppiert der Anwender mehrere Grundelemente zu einem neuen Softwareelement, besteht u. U. der Wunsch, Kopien von dem neu erzeugten Softwareelement - der Gruppe - zu erstellen. Mit einer derartigen Ausführungsform wird vor dem Kopieren eine neue und vom Anwender modifizierbare Instanzvorlage zu der Gruppe von Grundelementen erzeugt. Somit sind Gruppe und Kopien der Gruppe mit einer gemeinsamen, vom Anwender modifizierbaren Instanzvorlage verbunden, über die Änderungen gleichzeitig für die ursprünglich erzeugte Gruppe und deren Kopien bewirkt werden können.

Weitere vorteilhafte Ausführungen des Systems kennzeichnen sich dadurch, dass das System zur Grafikerstellung und/oder Texterstellung vorgesehen ist. Bei der Erstellung von Grafiken besteht oftmals der Wunsch, ein einmal erzeugtes Grafikobjekt zu kopieren, um so den Aufwand bei der Erzeugung der Grafik zu reduzieren. Sollen nach dem Kopieren Änderungen an dem Grafikobjekt und den erstellten Kopien in gleicher Weise durchgeführt werden, können diese Änderungen anhand der gemeinsamen Instanzvorlage sehr effizient für Original und Kopien durchgeführt werden.

Eine spezielle Ausprägung des erfindungsgemäßen Systems ist als Engineeringsystem insbesondere zur Verhaltensbeschreibung von Komponenten in der Automatisierungstechnik ausgeführt. Die Einfachheit des Engineering ist ein wesentlicher Erfolgsfaktor bei dem Entwurf, der Implementierung und der Inbetriebnahme von Anlagen und Maschinen speziell im Automatisierungsumfeld. Ein Anwender versucht bei solchen Engineeringaufgaben im Allgemeinen, Teilinformationen aus alten Projekten in einem aktuellen Projekt ggf. mehrfach wieder zu verwenden. Projektspezifische Änderungen können an diesen Teilinformationen durch das automatische Erzeugen einer Instanzvorlage bei einem Kopiervorgang sehr leicht auf alle Kopien der Teilinformationen übertragen werden.

Im Folgenden wird die Erfindung anhand der in den Figuren dargestellten Ausführungsbeispiele näher beschrieben und erläutert. Es zeigen:
- FIG 1: eine schematische Darstellung eines Engineeringsystems mit automatischer Generierung von Instanzvorlagen und
- FIG 2: ein Ablaufdiagramm eines Verfahrens zur automatischen Generierung von Instanzvorlagen bei einem Kopiervorgang.

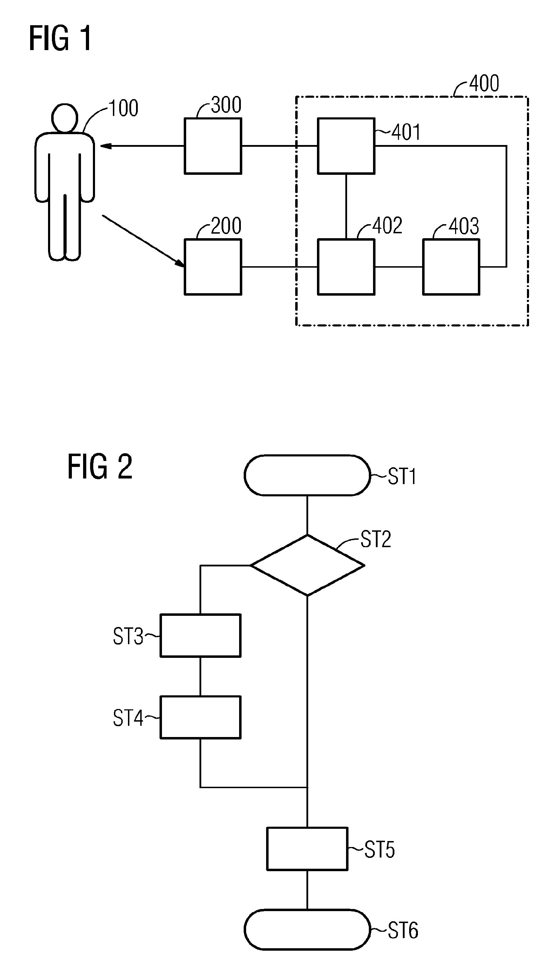

FIG 1 zeigt eine schematische Darstellung eines Engineeringsystems 400 mit automatischer Generierung von Instanzvorlagen. Das Engineeringsystem 400 wird zur Verhaltensbeschreibung Speicherprogrammierbarer Steuerungen in der Automatisierungstechnik eingesetzt.

Das Engineeringsystem 400 umfasst eine Anwenderoberfläche 401 zur Darstellung von Projektdaten und für einen Anwender 100 aktuell verfügbarer Kommandos. Weiterhin weist das Engineeringsystem 400 einen Speicher 403 auf, in dem zum einen die Projektdaten und zum anderen Daten über Grundelemente, Vorlagen und Typen sowie Instanzen von Vorlagen und Typen abgelegt sind.

Ferner verfügt das Engineeringsystem 400 über eine Verarbeitungseinheit 402, mit der die Anwendungssteuerung des Engineeringsystems 400 realisiert wird. Die Anwendungssteuerung erfasst mit Hilfe eines unterlagerten Ablaufsystems von dem Anwender über ein Eingabegerät 200 eingegebene Befehle und interpretiert diese. Die Kommandos wirken sich auf die im Speicher 403 abgelegten Projektdaten und die aktuell verfügbaren Kommandos aus. Über ein Ausgabegerät 300 werden dem Anwender 100 Informationen des Engineeringsystems 400 dargestellt.

Von der Verarbeitungseinheit 402 wird insbesondere bei einem vom Anwender 100 eingegebenen Kopierbefehl ein Verfahren zur automatischen Generierung von Instanzvorlagen durchgeführt. Ein derartiges Verfahren ist in FIG 2 dargestellt und wird nachfolgend beschrieben.

FIG 2 zeigt ein Ablaufdiagramm eines Verfahrens zur automatischen Generierung von Instanzvorlagen bei einem Kopiervorgang. Das Verfahren wird gestartet durch eine Anwenderaufforderung ST1 zum Kopieren eines selektierten Elementes. Bei dem selektierten Element handelt es sich um ein Grafikelement, dass durch Gruppieren von Grundelementen in einem Grafikprogramm erzeugt wurde. Beispielspielsweise handelt es sich bei der so erzeugten Gruppe um ein Symbol, das aus den im Grafikprogramm inhärenten Grundelementen Rechteck und Linie besteht, wobei das Symbol aus zwei zu einem Diagonalkreuz innerhalb des Rechtecks angeordneten Linien konstruiert ist.

In einem zweiten Verfahrensschritt ST2 wird automatisch geprüft, ob die selektierte Gruppe mit einer Instanzvorlage, bei der es sich sowohl um einen Typ gemäß Typkonzept als auch um eine Vorlage gemäß Vorlagenkonzept handeln kann, verbunden ist. Ist eine solche Verbindung existent und handelt es sich bei der Instanzvorlage um eine von dem Anwender editierbare Instanzvorlage, wird das Element direkt kopiert.

Wird hingegen beim zweiten Verfahrenschritt ST2 festgestellt, dass die Gruppe mit keiner Instanzvorlage verbunden ist oder mit einer vom Anwender nicht modifizierbaren systeminhärenten Instanzvorlage verbunden ist, wird auf einen dritten Verfahrensschritt ST3 verzweigt. Im dritten Verfahrenschritt ST3 wird auf Basis der selektierten Gruppe von Grundelementen eine Instanzvorlage generiert. Die Instanzvorlage wird mit Informationen der selektierten Gruppe gefüllt.

Anschließend wird im vierten Verfahrensschritt ST4 die selektierte Gruppe mit der neu generierten Instanzvorlage, bei der es sich je nach Konzept sowohl um einen Typ als auch um eine Vorlage handeln kann, verbunden.

Im fünften Verfahrensschritt ST5 wird schließlich die selektierte Gruppe, die nun mit der neu erzeugten Instanzvorlage verbunden ist, kopiert. Auf diese Weise ist auch die Kopie der selektierten Gruppe mit der Instanzvorlage verbunden. Änderungen, die nun an der Instanzvorlage durchgeführt werden, können hierdurch sehr einfach sowohl für die ursprüngliche selektierte Gruppe als auch für deren Kopie wirksam gemacht werden. Beispielsweise kann ein Anwender des Grafikprogramms die Linienstärke des Diagonalkreuzes für die ursprünglich selektierte Gruppe sowie für alle erstellten Kopien direkt an der Instanzvorlage ändern.

Im sechsten Verfahrensschritt ST6 wird schließlich eine dem Anwender zur Verfügung stehende Benutzeroberfläche aktualisiert, um den aktuellen Zustand der Projektdaten anzuzeigen.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke, dass in einem ersten Verfahrenschritt geprüft wird, ob eine Verbindung zwischen dem selektierten Softwareelement und einer vom Anwender modifizierbaren Instanzvorlage existiert, und sofern keine Verbindung besteht eine von dem Anwender modifizierbaren Instanzvorlage auf Basis des Softwareelementes erzeugt und das Softwareelementes mit der Instanzvorlage verbunden wird, erhalten bleibt. So ist das Verfahren nicht nur auf Grafikelemente anwendbar sondern insbesondere auch auf Textelemente. Beispielsweise kann das erfindungsgemäße Verfahren verwendet werden, um einen Absatz eines Textes, der nicht mit einer Formatvorlage verbunden ist, zu kopieren. Beim Kopiervorgang wird automatische oder nach Dialog mit einem Anwender eine Formatvorlage für den Absatz generiert, so dass Änderungen im Nachhinein an der Formatvorlage durchgeführt werden können und diese sich sowohl auf den ursprünglichen Absatz als auch auf die Kopie auswirken.

## Patentansprüche

1. Verfahren zum Kopieren mindestens eines Softwareelementes, bei dem vor dem Kopieren folgende Verfahrensschritte durchgeführt werden:
• Prüfung, ob eine Verbindung zwischen dem Softwareelement und einer von einem Anwender modifizierbaren Instanzvorlage existiert,
und sofern keine Verbindung besteht:
• Erzeugen einer von dem Anwender modifizierbaren Instanzvorlage auf Basis des Softwareelementes und
• Verbinden des Softwareelementes mit der Instanzvorlage.

2. Verfahren nach Anspruch 1,
**dadurch gekennzeichnet, dass** mindestens ein Verfahrensschritt automatisch durch eine Verarbeitungseinheit (402) insbesondere ohne Anwendereingriff durchgeführt wird.

3. Verfahren nach einem der Ansprüche 1 oder 2,
**dadurch gekennzeichnet, dass** mindestens ein Verfahrensschritt anwendergesteuert erfolgt.

4. Verfahren nach einem der vorhergehenden Ansprüche,
**dadurch gekennzeichnet, dass** das Softwareelement gruppierte systeminhärente Grundelemente aufweist.

5. Verfahren nach einem der vorhergehenden Ansprüche,
**dadurch gekennzeichnet, dass** das Verfahren zur Grafikerstellung und/oder Texterstellung eingesetzt wird.

6. Verfahren nach einem der vorhergehenden Ansprüche,
**dadurch gekennzeichnet, dass** das Verfahren für Engineeringaufgaben insbesondere zur Verhaltensbeschreibung von Komponenten in der Automatisierungstechnik eingesetzt wird.

7. System zur Projektierung von Daten mit einer Verarbeitungseinheit (402) zum Kopieren mindestens eines Softwareelementes, wobei die Verarbeitungseinheit (402) zur Durchführung folgender Verfahrensschritte vor dem Kopieren vorgesehen ist:
• Prüfung, ob eine Verbindung zwischen dem Softwareelement und einer von einem Anwender modifizierbaren Instanzvorlage existiert, und sofern keine Verbindung besteht:
• Erzeugen einer von dem Anwender modifizierbaren Instanzvorlage auf Basis des Softwareelementes und
• Verbinden des Softwareelementes mit der Instanzvorlage.

8. System nach Anspruch 7,
**dadurch gekennzeichnet**, die Verarbeitungseinheit (402) zur automatischen Durchführung mindestens eines Verfahrensschrittes insbesondere ohne Anwendereingriff vorgesehen ist.

9. System nach einem der Ansprüche 7 oder 8,
**dadurch gekennzeichnet, dass** die Verarbeitungseinheit (402) zur anwendergesteuerten Durchführung mindestens eines Verfahrensschrittes vorgesehen ist.

10. System nach einem der Ansprüche 7 bis 9,
**dadurch gekennzeichnet, dass** die Verarbeitungseinheit (402) zum Kopieren gruppierter systeminhärenter Grundelemente vorgesehen ist.

11. System nach einem der Ansprüche 7 bis 10,
**dadurch gekennzeichnet, dass** das System zur Grafikerstellung und/oder Texterstellung vorgesehen ist.

12. System nach einem der Ansprüche 7 bis 11,
**dadurch gekennzeichnet, dass** das System als Engineeringsystem insbesondere zur Verhaltensbeschreibung von Komponenten in der Automatisierungstechnik ausgeführt ist.

13. Computerprogrammprodukt zur Durchführung eines Verfahrens nach einem der Ansprüche 1 bis 6.
